# EUROPÄISCHE PATENTANMELDUNG

(11) **EP 0 857 750 A1**
(43) Veröffentlichungstag der Anmeldung: **12.08.1998**
(21) Anmeldenummer: 98101474.9
(22) Anmeldetag: 28.01.1998
(51) Int. Cl.: C08K 5/00, C08L 23/04

(54) **Umhüllung aus Kunststoff mit Zugaben von Insektiziden**

(30) Priorität: 05.02.1997 DE 19704349
(71) Anmelder: RXS Kabelgarnituren Gesellschaft mit beschränkter Haftung, 58093 Hagen (DE)
(72) Erfinder: Kupczyk, Andreas, 58099 Hagen (DE); Rose, Sigrid, Dr., 58300 Wetter (DE); Meltsch, Hans-Jürgen, 58239 Schwerte (DE)
(74) Vertreter: Epping, Wilhelm, Dr.-Ing.

(57) **Zusammenfassung**

Bei der Erfindung handelt es sich um Umhüllungen aus Kunststoff mit Zugabe mindestens eines Insektizides, das vorzugsweise gegen Termiten wirksam ist. Die Umhüllungen bestehen aus wärmeschrumpfenden oder nicht schrumpfbaren Kunststoffcompounds, denen ein entsprechend wirksames Insektizid beigefügt ist. Die Anwendung eignet sich besonders für Kabelmuffen, die im Erdbereich eingesetzt werden.

## Beschreibung

Die Erfindung betrifft eine Umhüllung aus Kunststoff mit Zugabe mindestens eines Insektizides für den Einsatz im Erdreich.

Bei ins Erdreich verlegten Gegenständen aus Kunststoff, wie zum Beispiel Kabeln mit Kunststoffmänteln, Kabelgarnituren oder Kunststoffrohren für den Transport von gasförmigen oder flüssigen Medien besteht die Gefahr, daß Insekten, insbesondere Termiten im asiatischen Raum, den Kunststoff an- bzw. durchbeißen und somit die jeweilige Anlage zerstören. So werden zum Beispiel den Kunststoffcompounds von Kabelumhüllungen bzw. Kabelmänteln Insektizide zugemischt, die einen Angriff von Insekten, insbesondere von Termiten verhindern.

So wird beispielsweise in der EP - 428 176 - A ein Termiticid beschrieben, das dem Umhüllungsmaterial beigefügt wird, das unter anderem für Drahtisolierungen verwendet wird. Dieses Termiticid tötet die Termiten nicht ab, verhindert jedoch, daß das Material angegriffen wird.

Aus US - 4 631 301 - A ist ein weiteres Insektizid bekannt, das thermoplastischen oder elastischen Materialien zugemischt wird, um einen Angriff von Termiten abzuwenden.

Aus GB 2 132 482 - B ist eine termitenabweisende Substanz bekannt, die Polyethylen (PE) - oder Polyvinylchlorid (PVC) - Zusammensetzungen beigemischt wird, um einen Termitenschutz zu erhalten, wobei besonderes Gewicht auf gute Umweltverträglichkeit gelegt ist.

Bei den genannten Anwendungen können Insektizide verwendet werden, die keiner erhöhten Temperatur ausgesetzt werden, da sie als fertiges Produkt ins Erdreich eingegraben werden.

Für vorliegende Erfindung stellt sich jedoch die Aufgabe, Umhüllungen, insbesondere Kabelgarnituren zu schaffen, die sicher sind gegen den Angriff von Insekten, insbesondere von Termiten.

Die gestellte Aufgabe wird gemäß der Erfindung mit einer Umhüllung aus Kunststoff der eingangs erläuterten Art dadurch gelöst, daß die Umhüllung aus Kunststoff als Kabelgarnitur mit mindestens einem Kabeleinführungsbereich und einem Spleißraum für Verbindungseinheiten ausgebildet ist und daß dem Kunststoff als Insektizid ein Pyrethroid und/oder ein Carbamat und/oder ein Phosphorsäureester und/oder ein Chlorkohlenwasserstoff und/oder ein aromatischer Kohlenwasserstoff und/oder ein anorganisches Insektizid und/oder ein natürliches Insektizid und/oder ein Acylharnstoff und/oder ein Amidin und/oder ein Dinitrophenol und/oder ein Thiocyanat und/oder Zinn-organische Verbindung beigefügt ist.

Bei Verwendung eines Kunststoffcompounds mit entsprechender Vernetzungs- und Reckbehandlung ist es durch die Erfindung möglich, daß auch Umhüllungen aus Kunststoff mit Wärmeschrumpfeigenschaften verwendet werden können, die auch bei hohen Temperaturen, zum Beispiel im Bereich von 160 - 250° C beaufschlagt werden können, wie es zum Beispiel bei Schrumpfprodukten der Fall ist. Dabei wird das Kunststoffcompound für Schrumpfprodutke verwendet, das im wesentlichen aus Kunststoffkomponenten der Polyethylen-Basis besteht, dem entsprechende Zusätze für die verschiedenen Modifikationen beigefügt sind. Ein solches schrumpfbares Material wie z.B. Polyethylen mit einem Copolymer (beispielsweise Ethylen-Vinyl-Acetat), mit Ruß und entsprechenden Antioxydantien, wird nun gemäß der Erfindung mit geeigneten Insektiziden zusätzlich ausgerüstet, die den Erfordernissen von Schrumpfprodukten, insbesondere der Wärmebeanspruchung genügen und die bei Zuführung von Wärme während des Schrumpfvorganges nicht zerstört werden. Diese schrumpfbaren Umhüllungen, die zum Beispiel als Schrumpfmuffen ausgebildet sind und im Erdreich vergraben werden können, werden an Ort und Stelle montiert und durch Zuführung von Wärme zumindest in den Endbereichen der Kabeleinlässe geschrumpft, so daß die zugesetzten Insektizide diese Temperaturbelastung ohne Schaden bestehen müssen. Außerdem müssen die je nach Land bestehenden gesetzlichen Vorschriften bezüglich der Unbedenklichkeit für Menschen und Umwelt berücksichtigt werden, z.B. MAK-Werte und Wassergefährdungsklasse für BRD. Dies führt auch dazu, daß hochwirksame Insektizide in möglichst geringen Dosen eingesetzt werden sollen. Gemäß der Erfindung sind Beimischungen von Insektiziden insbesondere von Cyfluthrin, Cypermethrin, Dimethoat, Fluvalinat oder Permethrin besonders abwehrend wirksam gegen Termiten, z.B. in einer Zudosierung von 0,1 - 5%,vorzugsweise von 0,5 bis 2%. Eine Zudosierung von Insektiziden kann in Granulatform vor der Extrusion des Produktes oder bei der Herstellung des Compounds erfolgen.

Vorteilhaft ist auch, daß das pulverförmige, flüssige, pastöse Insektizid auf eine polymere Matrix in Granulatform aufgebracht wird, z.B. auf Polyethylen oder Copolymer (z.B. EVA) oder auch in Form eines insektizidhaltigen Polymermasterbatches.

Die schrumpfbare Umhüllung kann zusätzlich mit Gewebe-, Gitter- oder Vlieseinlagen aus mechanisch festen Materialien, zum Beispiel Polyethylen, Polypropylen, Polyester, Copolymer versehen werden, die entweder in der Compoundschicht eingebettet oder aufgebracht werden, um größere mechanische Festigkeit zu erhalten. Außerdem kann die Compoundschicht mit einer bei Wärmeeinwirkung aktivierbaren Kleberschicht (hot melt bzw. Schmelzkleber) versehen werden, durch die eine größere Dichtwirkung und Haftung zum umhüllten Gegenstand erreicht wird. Auch in dieser Kleberschicht können Insektizide der aufgeführten Art eingemischt werden. Für eine solche Kleberschicht eignen sich beispielsweise Polyamid-Kleber oder Polyethylen-Kleber, wobei letztere aufgrund der höheren Zähigkeit noch widerstandsfähiger gegen Termitenbisse sind.

Für eine solche Kleberschicht ist auch ein Compound auf Polypropylen oder Ethylen-Vinyl-Acetat-Basis oder einer Copolymer-Basis geeignet.

Auch bei Kabelgarnituren aus nicht schrumpfbarem Kunststoffmaterial besteht die Gefahr, daß Insekten, insbesondere Termiten, Schaden anrichten können, die zur Undichtigkeit führen. Derartige Kabelgarnituren bestehen zum Beispiel aus stirnseitigen Dichtungskörpern mit Kabeleinführungen und einem Muffenrohr, das den dazwischenliegenden Spleißraum überdeckt. Bei einer Haubenmuffe wird statt des Muffenrohres eine einseitig geschlossene Muffenhaube verwendet. In den Trennfugen werden Dichtungsmittel aus plastischem oder elastischem Kunststoffmaterial eingefügt. Um ausreichenden Insektenschutz zu erreichen werden gemäß der Erfindung auch die Materialien der Dichtungskörper, des Muffenrohres bzw. der Muffenhaube, sowie des Dichtungsmittels - wie oben bereits beschrieben wurde - mit Zusätzen von Insektiziden versehen. Dabei kann bzw. können wie auch bei den schrumpfbaren Materialien ein oder mehrere Insektizide zugemischt werden. Als besonders vorteilhaft in der Wirkung zeigen sich Permethrin oder Cyfluthrin.Als nicht schrumpfbare Materialien werden hier thermoplastische Kunststoffe wie z.B. Polypropylen, Polyamid, Polyethylen oder Acrylnitril-Butadien-Styrol-Polymerisat (ABS), als plastisches Dichtungsmittel z.B. Butylkautschuk und/oder Polyisobutylen und als elastisches Dichtungsmittel zum Beispiel Silikonkautschuk verwendet.

Schließlich können erfindungsgemäße Umhüllungen auch noch zusätzlich mit Permeationssperren aus Folien beschichtet werden, wofür vorzugsweise Aluminiumfolien verwendet werden.

Die als Durchgangsmuffen ausgebildeten Kabelgarnituren sind längsgeteilt und weisen entlang ihrer Längsränder Wülste auf, über die als Verschlußeinheiten darübergreifende Verschlußschienen aufgezogen werden. Die Kabelgarnituren können sowohl für elektrische als auch für optische Kabelanlagen vewendet werden.

Als Insektizide eignen sich besonders Wirkstoffe, die nachfolgend in Funktionsgruppen aufgeteilt, aufgelistet sind:
**Pyrethroide,** z.B.
   - Allethrin
   - Bifenthrin
   - Cyfluthrin
   - Cyhalothrin
   - Cypermethrin
   - Deltamethrin
   - Fenpropathrin
   - Fenvalerat
   - Flucythrinat
   - Fluvalinat
   - Lambdacyhalothrin
   - Permethrin
   - Phenothrin
   - Resmethrin
   - Tetramethrin
   - Tralomethrin
**Carbamate,** z.B.
   - Carbaryl
   - Carbofuran
   - Propoxur
**Phosphorsäureester,** z.B.
   - Azinphos-ethyl
   - Azinphos-methyl
   - Diazinon
   - Dichlorvos
   - Dimethoat
   - Dimeton
   - Fenithrothion
   - Malathion
   - Parathion-ethyl
   - Parathion-methyl
   - Phosphamidon
   - Phoxim
   - Propethamphos
   - Trichlorphon
**Chlorkohlenwasserstoffe,** z.B.
   - Aldrin
   - Chlordan
   - Chlornaphthalin
   - Camphechlor (Toxaphen)
   - DDT
   - Dieldrin
   - Endrin
   - Heptachlor
   - Lindan
   - Methoxychlor
   - Pentachlorphenol
**aromatische Kohlenwasserstoffe,** z.B.
   - Anthracen
   - Blei- oder Kupfernaphthenat
   - Naphthalin
   - Phenanthren
**anorganische Insektizide,** z.B.
   - Arsen-Präparate
   - Hexafluoroscilicate
   - Kryolith
   - Natriumfluorid
**Natürliche Insektizide,** z.B.
   - Alkaloide
   - Cumarine
   - Endotoxine
   - Hormone
   - Pyrethrum
   - Repellents
   - Rotenoide
**sowie,** z.B.
   - Acylharnstoffe
   - Amidine
   - Dintrophenole
   - Thiocyanate
   - Zinn-organische Verbindungen

Die Erfindung wird anhand von drei Figuren näher erläutert.

Figur 1 zeigt eine Durchgangsmuffe.

Figur 2 zeigt eine Haubenmuffe.

Figur 3 zeigt eine Schrumpfmuffe.

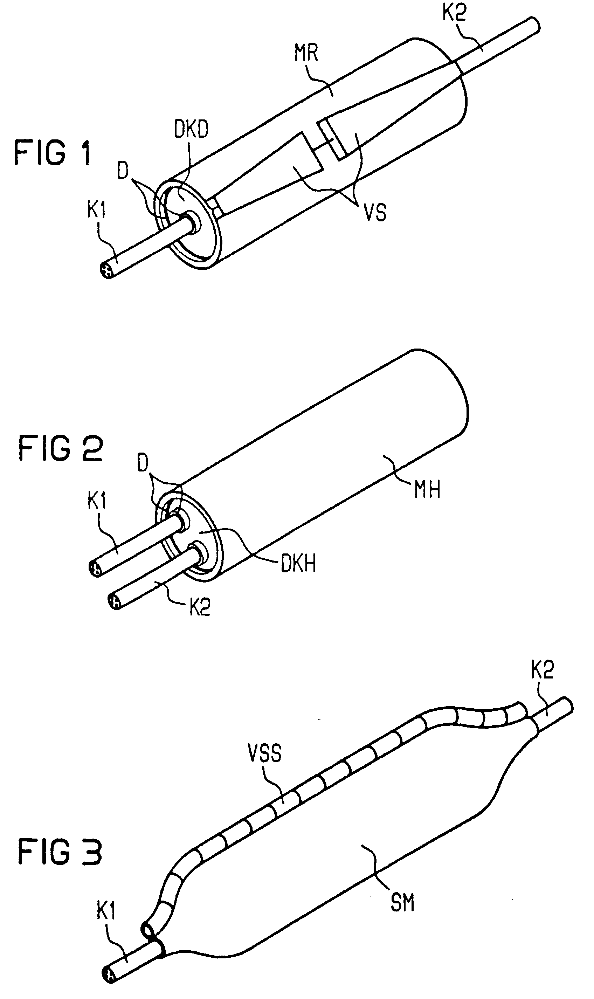

Figur 1 zeigt eine nicht schrumpfbare Kabelgarnitur gemäß der Erfindung, wobei die Kunststoffmaterialien für die stirnseitigen Dichtungskörper DKD, für das Muffenrohr MR und für die Dichtungsmittel D mit entsprechenden Zusätzen von Insektiziden versehen sind. Wenn zusätzlich termitenfeste Kabel K1 und K2 verwendet werden, so ist das gesamte System gegen Beschädigungen durch Insekten gesichert. Verschlußschienen VS verschließen das längsgeteilte Muffenrohr MR.

Figur 2 zeigt als Kabelgarnitur eine Haubenmuffe, bei der die Kabel K1 und K2 einseitig durch einen Dichtungskörper DKH eingeführt werden. Hier werden ebenso alle Materialien mit Insektiziden versehen.

Figur 3 zeigt eine Schrumpfmuffe SM, die zumindest in den Kabeleinführungsbereichen schrumpfbar ist. Auch hier ist eine Verschlußschiene VSS vorgesehen, mit der die Längswülste der Längsränder umfaßt werden. Das Material der Schrumpfmuffe ist mit mindestens einem Insektizid versehen.

## Patentansprüche

1. Umhüllung aus Kunststoff mit Zugabe mindestens eines Insektizides für den Einsatz im Erdbereich,
**dadurch gekennzeichnet,**
daß die Umhüllung aus Kunststoff als Kabelgarnitur mit mindestens einem Kabeleinführungsbereich und einem Spleißraum für Verbindungseinheiten ausgebildet ist und daß dem Kunststoff als Insektizid ein Pyrethroid und/oder ein Carbamat und/oder ein Phosphorsäureester und/oder ein Chlorkohlenwasserstsoff und/oder ein aromatischer Kohlenwasserstoff und/oder ein anorganisches Insektizid und/oder ein natürliches Insektizid und/oder ein Acylharnstoff und/oder ein Amidin und/oder ein Dinitrophenol und/oder ein Thiocyanat und/oder Zinn-organische Verbindung beigefügt ist.

2. Umhüllung nach Anspruch 1,
**dadurch gekennzeichnet,**
daß der Kunststoff der Kabelgarnitur ein Kunststoffcompound auf Polyethylen-Basis ist, wobei der Kunststoff der Kabelgarnitur zumindest in den Einführungsbereichen wärmeschrumpfende Eigenschaften aufweist.

3. Umhüllung nach Anspruch 2,
**dadurch gekennzeichnet,**
daß diese Umhüllung eine durch Wärme aktivierbare Kleberschicht, vorzugsweise eine Heißschmelzkleberschicht, aufweist.

4. Umhüllung nach Anspruch 3,
**dadurch gekennzeichnet,**
daß die durch Wärme aktivierbare Kleberschicht auf Polyethylen-Basis aufgebaut ist.

5. Umhüllung nach Anspruch 3,
**dadurch gekennzeichnet,**
daß die durch Wärme aktivierbare Kleberschicht auf Polyamid-Basis aufgebaut ist.

6. Umhüllung nach Anspruch 3,
**dadurch gekennzeichnet,**
daß die durch Wärme aktivierbare Kleberschicht aus einem Compound auf Polypropylen/Polyethylen/Ethylen-Vinyl-Acetat (EVA)-Basis oder Copolymer-Basis besteht.

7. Umhüllung nach einem der Ansprüche 3 bis 6,
**dadurch gekennzeichnet,**
daß ein Insektizid in der Kleberschicht zugefügt ist.

8. Umhüllung nach einem der Ansprüche 2 bis 7,
**dadurch gekennzeichnet,**
daß die Insektizide bei Schrumpftemperatur im Bereich von 160 bis 250° C temperaturstabil sind.

9. Umhüllung nach einem der Ansprüche 2 bis 8,
**dadurch gekennzeichnet,**
daß eine Gewebe-, Gitter- oder Vlieseinlage im Kunststoffcompound der Umhüllung eingebettet ist.

10. Umhüllung nach einem der Ansprüche 2 bis 8,
**dadurch gekennzeichnet,**
daß eine Gewebe-, Gitter- oder Vlieseinlage auf der Oberfläche der Umhüllung angeordnet ist.

11. Umhüllung nach einem der Ansprüche 2 bis 10,
**dadurch gekennzeichnet,**
daß eine Permeationssperre in Form einer Folie, vorzugsweise aus Aluminium, auf die Umhüllung aufgebracht ist.

12. Umhüllung nach Anspruch 1,
**dadurch gekennzeichnet,**
daß der Kabeleinführungsbereich von einem Dichtungskörper und der Spleißraum von einem Muffenrohr oder einer Muffenhaube gebildet sind und daß ein Dichtungsmittel in den Trennfugen zwischen Dichtungskörper und Muffenrohr oder Muffenhaube und in den Kabeleinführungsbereichen angeordnet ist.

13. Umhüllung nach Anspruch 12,
**dadurch gekennzeichnet,**
daß der Dichtungskörper und das Muffenrohr oder die Muffenhaube aus einem thermoplastischen Kunststoff wie z.B. Polypropylen, Polyamid, Polyethylen, Acrylnitril-Butadien-Styrol-Polymerisat bestehen.

14. Umhüllung nach Anspruch 12,
**dadurch gekennzeichnet,**
daß das Dichtungsmittel aus plastischem Kunststoffcompound wie z.B. Butylkautschuk und/oder Polyisobutylen besteht.

15. Umhüllung nach Anspruch 12,
**dadurch gekennzeichnet,**
daß das Dichtungsmittel aus elastischem Kunststoff, wie z.B. Silikonkautschuk besteht.

16. Umhüllung nach einem der vorhergehenden Ansprüche,
**dadurch gekennzeichnet,**
daß mindestens ein Insektizid in einem Mischungsverhältnis von 0,1 bis 5 %, vorzugsweise von 0,5 bis 2 %, im jeweiligen Kunststoffcompound und/oder in der Kleberschicht und/oder im Dichtungsmittel beigefügt ist.

17. Umhüllung nach einem der vorhergehenden Ansprüche,
**dadurch gekennzeichnet,**
daß das Insektizid dem entsprechenden Kunststoffcompound und/oder der Kleberschicht und/oder dem Dichtungsmittel in Form eines insektizidhaltigen Polymermasterbatches, zum Beispiel Polyethylen oder Copolymer, vorzugsweise Ethylen-Vinyl-Acetat (EVA) beigefügt ist.

18. Umhüllung nach einem der vorhergehenden Ansprüche,
**dadurch gekennzeichnet,**
daß die Insektizide vorzugsweise gegen Termiten wirksam sind.

19. Umhüllung nach einem der vorhergehenden Ansprüche,
**dadurch gekennzeichnet,**
daß die Umhüllung längsgeteilt ist und entlang der Längsränder Verschlußeinheiten, vorzugsweise in Form von längs verlaufenden Wülsten und darüber greifenden Verschlußschienen, aufweist.

20. Umhüllung nach einem der vorhergehenden Ansprüche,
**dadurch gekennzeichnet,**
daß als Insektizid insbesondere Permethrin eingesetzt ist.

21. Umhüllung nach einem der Ansprüche 1 bis 19,
**dadurch gekennzeichnet,**
daß als Insektizid insbesondere Cyfluthrin eingesetzt ist.
